Europäisches Patentamt

European Patent Office

Office européen des brevets

(11) Publication number: **0 227 122 B1**

(12) **EUROPEAN PATENT SPECIFICATION**

(45) Date of publication of patent specification: **25.03.92** (51) Int. Cl.⁵: **H05F 3/00**

(21) Application number: **86201395.0**

(22) Date of filing: **07.08.86**

(54) **Lightning protection apparatus for an exterior surface.**

(30) Priority: **18.12.85 US 810355**

(43) Date of publication of application:
**01.07.87 Bulletin 87/27**

(45) Publication of the grant of the patent:
**25.03.92 Bulletin 92/13**

(84) Designated Contracting States:
**DE FR GB IT NL**

(56) References cited:
**US-A- 3 906 308**
**US-A- 4 429 341**

(73) Proprietor: **THE BOEING COMPANY**
**P.O. Box 3707 Mail Stop 7E-25**
**Seattle Washington 98124(US)**

(72) Inventor: **Brick, Rowan O.**
**362 - 167th Avenue N.E.**
**Bellevue Washington 98008(US)**

(74) Representative: **Hoijtink, Reinoud et al**
**OCTROOIBUREAU ARNOLD & SIEDSMA**
**Sweelinckplein 1**
**NL-2517 GK Den Haag(NL)**

Rank Xerox (UK) Business Services

# Description

The present invention relates to lightning protection apparatus for an electrically conductive exterior surface of a vehicle, comprising:

a protective coating of electrically insulating material adhered to said vehicle exterior surface; and

means for encouraging lightning attachment to said coated exterior surface at a plurality of points. Such apparatus is known from US-A-3.906.308.

In the field of aerospace vehicles, there exists a need for a lightning protection apparatus which will reduce interior sparking and minimize structural damage to the airfoil surface. There is also a need for an apparatus which will reduce the time that a ligthning stroke is attached to the surface of a vehicle.

Exterior surfaces of vehicles such as an aircraft are frequently coated with paints that have excellent dielectric strength properties; that is, the paint coatings have the ability to resist puncture by a lightning stroke. However, when a puncture does occur at a weak point in the paint coating the lightning stroke makes contact with the conductive surface of the aircraft at a point referred to as the attachment point. All of the lightning energy may thus be concentrated at one point. This can produce severe skin surface damage, hot spots, skin puncture, and interior sparking at joints or fasteners.

There currently exist a number of conventional methods for providing lightning protection to painted surfaces. For example, the thickness of the conductive surface can be increased in order to prevent skin puncture, or conductive overlays can be provided over the existing painted surface, as described in US-A-3.906.308. These methods add weight to the aircraft. Another method that has been employed, and which is disclosed in US-A-4.429.341, is to load the outer decorative layer of paint with fine conductive particles.

It is therefore an object of the present invention to provide lightning protection apparatus as described in the preamble of claim 1, which will minimize interior sparking and structural damage to the surface, which will not add excessive weight to the conductive surface, which will perform well mechanically in severe environments and will have a pleasing appearance, and which will reduce the time that a ligthning stroke is attached to the conductive surface.

## SUMMARY OF THE INVENTION

This is accomplished according to the invention in that said attachment encouraging means comprise means within said coating for providing locally reduced dielectric strength between said exterior surface of said vehicle and the exterior surface of said coating at a plurality of points.

Further advantageous embodiments of the lightning protection apparatus according to the invention form the subject-matter of dependent claims 2-11.

The accompanying drawings, which are incorporated in and constitute a part of the specification, illustrate two preferred embodiments of teh invention and, together with the general description of the invention given above and the detailed description of the preferred embodiments given below, serve to explain the principles of the invention.

## BRIEF DESCRIPTION OF THE DRAWINGS

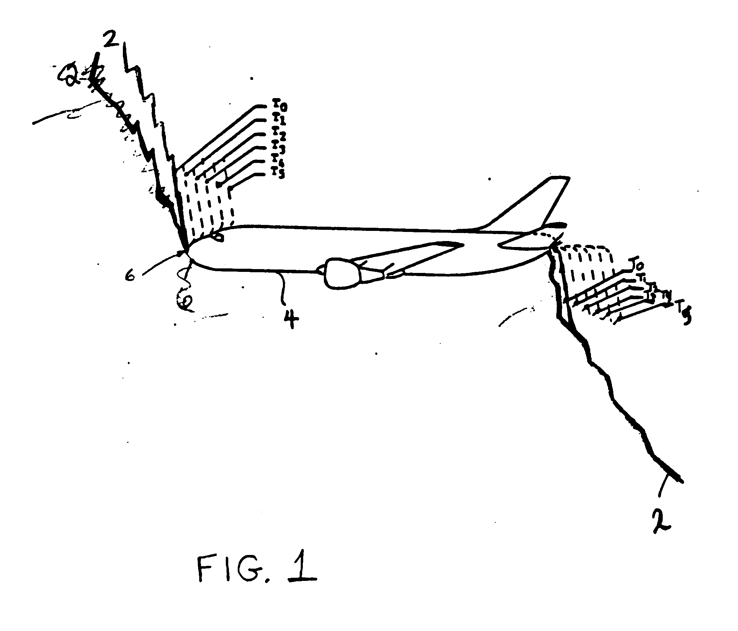

Fig. 1 illustrates an aircraft with a lightning stroke attaching and sweeping;

Fig. 2 illustrates a prior art conductive coating with conductive particles in contact with each other;

FIG. 3 is a schematic diagram illustrating a protective coating with conductive particles formed in accordance with a preferred embodiment of the present invention;

FIG. 4 is a schematic diagram illustrating a protective coating with conductive particles formed in accordance with a second embodiment of the present invention;

FIG. 5 is a schematic diagram illustrating a lighting protective coating for a non-metallic surface; and

FIG. 6 illustrates a protective coating covering a fastener having a conductive projection.

## DESCRIPTION OF THE PREFERRED EMBODIMENTS

Reference will now be made in detail to the present preferred embodiments of the invention, examples of which are illustrated in the accompanying drawings in which like reference characters refer to like elements.

A lightning stroke begins with a step leader channel which develops from the cloud toward the ground or towards another charge center. As a step leader channel approaches an aircraft, high electrical fields are produced at the surface of the aircraft. These electrical fields create streamers which propagate away from the aircraft toward the step leader until one of them contacts the approaching lightning step leader. This will continue until one of the branches of the step leader reaches the ground or another charge center. The high current associated with lightning occurs after the step leader reaches the ground or charge center and forms a return stroke. This return stroke develops as the charge in the step leader channel flows into the low impedance ground to neutralize the charge which was attracted into that portion of the ground prior to establishment of the stroke channel.

The present invention is related to lightning protection apparatus for aircraft and other aerospace vehicles which reduces interior sparking and minimizes structural damage to an airfoil surface by encouraging multipoint attachments of a lightning channel to the conductive surface. Multipoint attachments can significantly reduce the energy dissipated at any one point when compared to a single attachment point. This energy reduction is approximately $E/n^2$ where E equals the total energy in the lightning channel for a single attachment point and n is the number of attachments for a multipoint attachment. The encouragement of multipoint attachments also reduces the dwell time in a lightning strike swept stroke zone. This is accomplished by allowing reattachment to occur more easily due to the locally weakened dielectric strength of the paint.

Fig. I shows the manner in which a lightning stroke typically interacts with an airplane. Initially the stroke will have at least one entrance point and one exit point. Usually the initial attachment point is at an extremity of the airplane such as the nose, wings or propeller blade. A lightning stroke has a channel 2 which is substantially stationary in space during the time it is transferring electrical charge. When the stroke attaches to airplane 4 at an attachment point 6 at time $t_0$, airplane 4 becomes part of lightning channel 2. Due to the speed of airplane 4 and the length of time that lightning channel 2 exists, airplane 4 moves relative to lightning channel 2 and the forward lightning channel 2 appears to sweep back over a portion of the surface known as the "swept stroke zone" over time periods $t_1$ through $t_5$. The significance of the swept stroke zone is that portions of the vehicle that would not be targets for the initial entry and exit point of a lightning flash may also be damaged as the stroke is swept aft over the vehicle. The amount of damage produced at a given attachment point by a swept stroke depends upon the type of material, the dwell time at that attachment point, and the lightning currents which flow during the attachment.

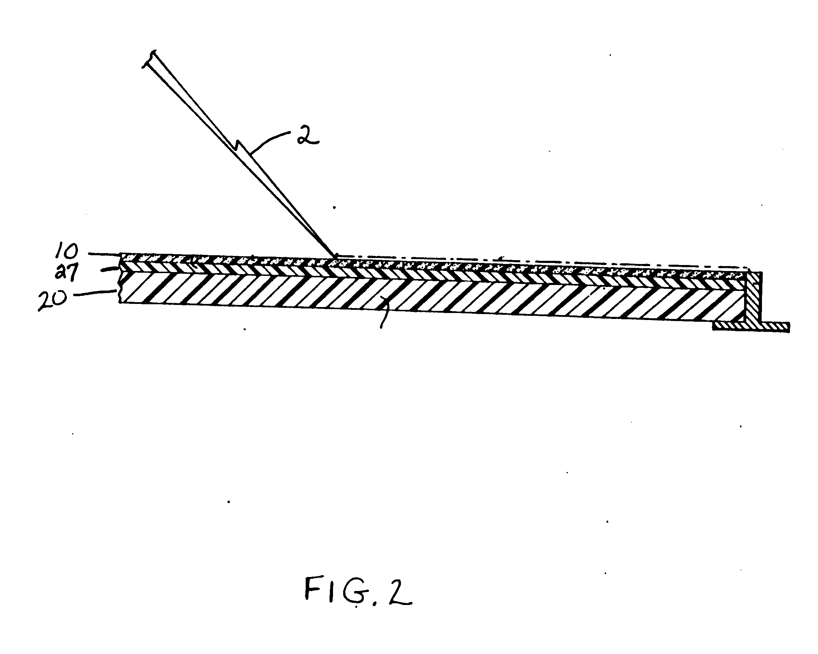

As described above, various methods have been attempted in order to provide lightning protection to conductive surfaces. One such method is illustrated in Fig. 2 where an outer decorative layer of paint I0 is loaded with fine conductive particles and is placed over a primer coating 27 and conductive surface 20. This method is disadvantageous in that it does not exhibit good mechanical performance in severe environments when applied over conductive surfaces. That is, coatings heavily laden with fine conductive particles will degrade the adhesion and erosion properties of the coating and will not provide the protective qualities needed over acceptable periods of time. Moreover, it is difficult to color match such coatings with normal decorative coatings.

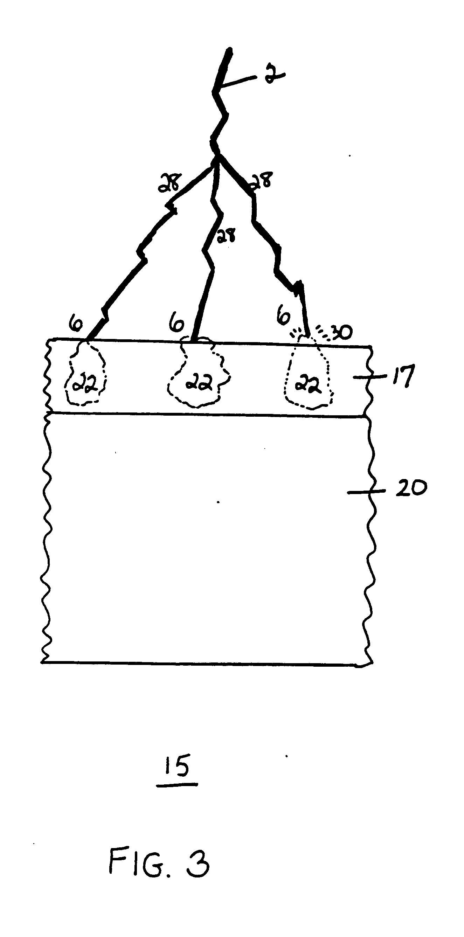

A lightning protection system which constitutes a preferred embodiment is shown in Fig. 3 and is represented generally by the numeral I5. System I5 includes an electrically insulating protective coating I7 adhered to a conductive surface 20. The invention includes means within the coating for providing locally reduced dielectric strength between the exterior structural surface and the exterior surface of the coating at a plurality of points. As embodied herein, the means for providing reduced dielectric strength includes conductive particles 22 which bridge the thickness of electrically insulating protective coating I7. This allows a lightning stroke to attach at a multiplicity of points 6 rather than one point and provides a coating having excellent appearance, color matching ability, and protective qualities.

As channel 2 approaches conductive surface 20, intense electrical fields 30 are produced which tend to produce multiple streamers 28 propagating from particles 22 toward the approaching lightning channel 2. The size and shape of particles 22 can enhance the ease with which multiple streamers 28 are produced by intensifying local fields 30 around the particle. A sharp pointed, irregularly shaped particle 22 may thus be more desirable for some applications than a flat or spherical particles. Moreover, it may be desirable to employ irregularly shaped particles 22 with major and minor dimensions and to align particles 22 such that their major dimensions are substantially perpendicular to surface 20, as shown in Fig. 3. This can be accomplished by electrostatic painting processes well-known in the art. In any case, particles 22 are spaced within electrically insulating protective coating I7 at distances greater than the dimension of the particles in the direction parallel to surface 20. For maximum effectiveness, particles 22 should also have a maximum dimension greater than one-tenth the thickness of coating I7.

Particles 22 need not be in electrical contact with adjacent particles. Although controlled spacing may be required in some cases, random spacing may be acceptable in other cases depending upon the conductivity and location of the surface to be protected. Initially, particles 22 need not be connected electrically to conductive surface 20, but must connect electrically to conductive surface 20 when under high electrical field stress such as an approaching lightning stroke. Such electrical connection to surface 20 will occur at a much lower electric field strength than that required to puncture coating l7 and, thus, will enhance multiple attachments.

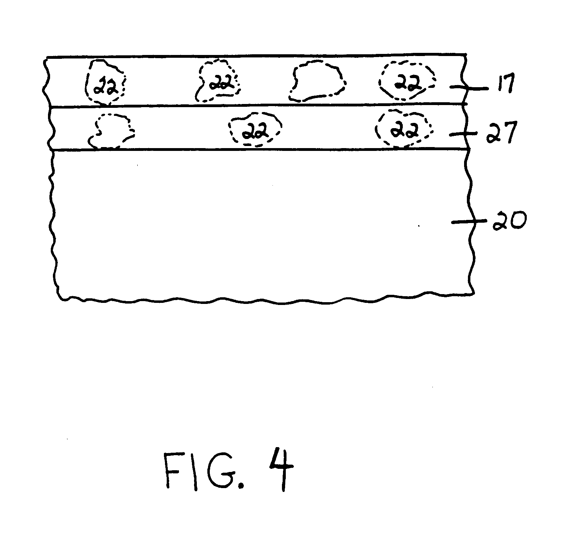

Particles 22 may also be formed in layers as shown in Fig. 4. One layer of particles 22 is embedded in electrically insulating protective coating 17 and another layer of particles 22 is embedded in a primer layer 27. However, in this arrangement, a greater number of particles 22 is required so that the probability of particle alignment to bridge both layers is sufficient to insure that the dielectric strength in the vicinity of particles 22 from the outer surface of coating 17 to conductive surface 20 is less than the dielectric strength between adjacent particles 22 in a direction parallel to surface 20.

The reduction of the dielectric strength of coating 17 will also reduce the dwell time of attachment points in swept stroke zones where lightning channel 2 lays close to conductive surface 20. Since lightning channel 2 can easily reattach to another location downstream, the energy input to any one localized area is reduced.

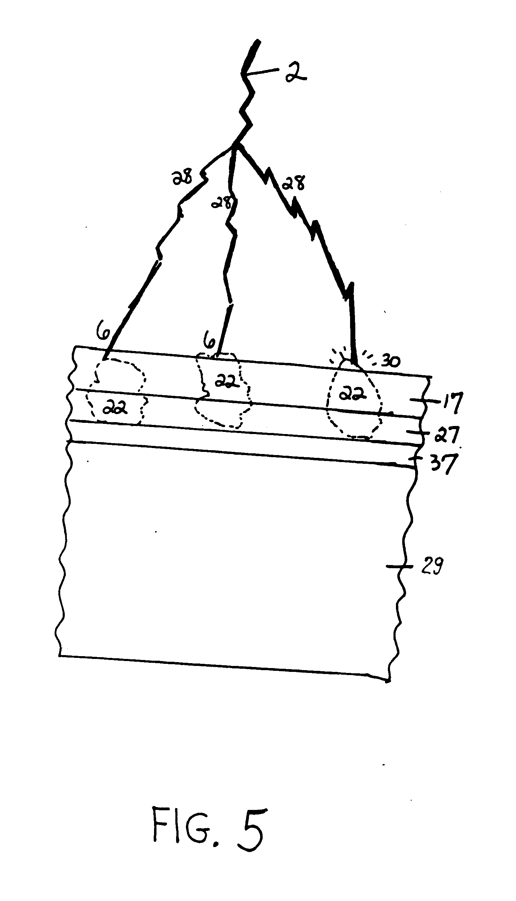

As shown in Fig. 5, the invention may be utilized for lightning protection of non-metallic surfaces such as a surface 29 composed of a conductive graphite-epoxy compound or a non-conductive fiberglass compound. An external conductive coating 37 of, for example, conductive metallic film, a conductive primer, or wires, may be interposed between primer 27 and the surface 29. This improves the ease of formation of streamers 28, thereby further encouraging multipoint attachment to conductive particles 22.

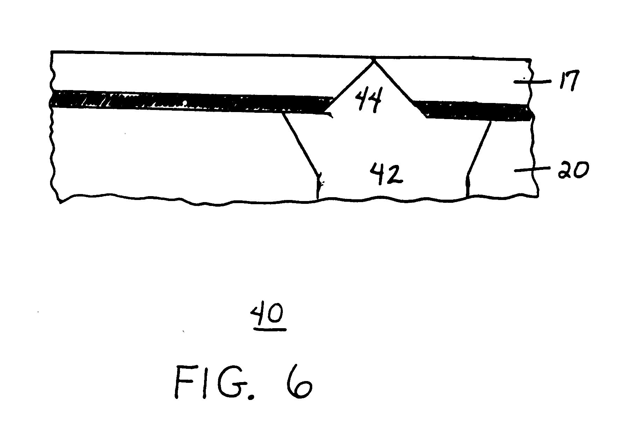

Fig. 6 illustrates a lightning protection system 40 which includes a plurality of conductive fasteners 42 capable of carrying high currents. System 40 includes an electrically insulating protective coating 17 adhered to conductive surface 20 which also covers fasteners 42. A conductive projection 44 is formed on each fastener 42 which extends in a direction perpendicular to conductive surface 20, thereby reducing the dielectric strength of coating 17 in the area of each fastener 42. Projection 44 of fastener 42 thus forms a more desirable attachment point for a lightning stroke as compared to other adjacent areas. Fastener 42 may be a threaded fastener or a standard structural fastener. A plurality of fasteners 42 is provided in order to minimize the current flow in any one fastener 42 by enhancing multipoint attachment.

## Claims

1. Lightning protection apparatus (15;40) for an electrically conductive exterior surface (20;37) of a vehicle (4), comprising:
    a protective coating (17) of electrically insulating material adhered to said vehicle exterior surface (20;37); and
    means for encouraging lightning attachment to said coated exterior surface (20;37) at a plurality of points;
    **characterized in that** said attachment encouraging means comprise means within said coating (17) for providing locally reduced dielectric strength between said exterior surface (20;37) of said vehicle (4) and the exterior surface of said coating (17) at a plurality of points.

2. Apparatus as recited in claim 1, **characterized in that** the means for providing locally reduced dielectric strength comprise a plurality of conductive particles (22) supported in said coating (17), said particles (22) being spaced in a direction parallel to said vehicle exterior surface (20;37) a distance greater than the thickness of said coating (17).

3. Apparatus as recited in claim 2, **characterized in that** said particles (22) have a maximum dimension greater that one-tenth the thickness of said coating (17).

4. Apparatus as recited in claim 2, **characterized in that** said particles (22) are irregularly shaped.

5. Apparatus as recited in any one of claims 2-4, **characterized in that** said particles (22) are in electrical contact with said vehicle exterior surface (20;37) when under high electrical field stress.

6. Apparatus as recited in any one of claims 2-5, **characterized in that** the dielectric strength between adjacent ones of said plurality of conductive particles (22) in a direction parallel to said vehicle exterior surface (20;37) is greater than the dielectric strength from the outer surface of said coating (17) to said vehicle exterior surface (20;37).

7. Apparatus as recited in any one of claims 2-6, **characterized in that** the separation between adjacent ones of said plurality of conductive particles (22) in a direction parallel to said vehicle exterior surface (20;37) is greater than the dimension of said particles (22) in a direction parallel to said vehicle exterior surface (20;37).

8. Apparatus as recited in any one of claims 2-7, **characterized by** a primer layer (27) adhered to said vehicle exterior surface (20;37) and supporting said electrically insulating protective coating (17).

9. Apparatus as recited in claim 8, **characterized by** a plurality of conductive particles (22) supported in said primer layer (27), said particles (22) being spaced at distances greater than the maximum dimension of said particles (22).

10. Apparatus as recited in claim 9, **characterized in that** each of said plurality of conductive particles (22) has a major and a minor dimension with said major dimension being aligned perpendicularly to said vehicle exterior surface (20;37).

11. Apparatus as recited in claim 1, **characterized in that** the means for providing locally reduced dielectric strength comprise a plurality of conductive fasteners (42), each having a conductive projection (44) formed thereon, which extends in a direction perpendicular to the conductive surface (20), thereby reducing the dielectric strength of the coating (17) in the area of each fastener (42).

**Revendications**

1. Appareil de protection contre la foudre (15 ; 40) destiné à une surface externe conductrice de l'électricité (20 ; 37) d'un véhicule (4), comprenant

un revêtement protecteur (17) d'un matériau isolant de l'électricité, adhérant à la surface externe (20 ; 37) du véhicule, et

un dispositif destiné à favoriser la fixation de la décharge à la surface externe revêtue (20 ; 37) en plusieurs points,

caractérisé en ce que le dispositif destiné à favoriser la fixation comporte un dispositif incorporé au revêtement (17) et destiné à donner une rigidité diélectrique localement réduite entre la surface externe (20 ; 37) du véhicule (4) et la surface externe du revêtement (17) en plusieurs points.

2. Appareil selon la revendication 1, caractérisé en ce que le dispositif destiné à donner une rigidité diélectrique localement réduite comprend plusieurs particules conductrices (22) supportées dans le revêtement (17), les particules (22) étant espacées en direction parallèle à la surface externe (20 ; 37) du véhicule d'une distance supérieure à l'épaisseur du revêtement (17).

3. Appareil selon la revendication 2, caractérisé en ce que les particules (22) ont une dimension maximale supérieure au dixième de l'épaisseur du revêtement (17).

4. Appareil selon la revendication 2, caractérisé en ce que les particules (22) ont une forme irrégulière.

5. Appareil selon l'une quelconque des revendications 2 à 4, caractérisé en ce que les particules (22) sont en contact électrique avec la surface externe (20 ; 37) du véhicule lorsqu'elles sont soumises à une contrainte due à un champ électrique élevé.

6. Appareil selon l'une quelconque des revendications 2 à 5, caractérisé en ce que la rigidité diélectrique entre celle des particules conductrices (22) qui sont adjacentes, en direction parallèle à la surface externe (20 ; 37) du véhicule, est supérieure à la rigidité diélectrique de la surface externe du revêtement (17) vers la surface externe (20 ; 37) du véhicule.

7. Appareil selon l'une quelconque des revendications 2 à 6, caractérisé en ce que la distance séparant celle des particules conductrices (22) qui sont adjacentes en direction parallèle à la surface externe (20 ; 37) du véhicule est supérieure à la dimension des particules (22) en direction parallèle à la surface externe (20 ; 37) des particules.

8. Appareil selon l'une quelconque des revendications 2 à 7, caractérisé par une couche d'accrochage (27) qui adhère à la surface externe (20 ; 37) du véhicule et supportant le revêtement protecteur isolant (17).

9. Appareil selon la revendication 8, caractérisé par plusieurs particules conductrices (22) supportées dans la couche d'accrochage (27), les particules (22) étant séparées par des distances supérieures à la distance maximale des particules (22).

10. Appareil selon la revendication 9, caractérisé en ce que chacune des particules conductrices (22) a une plus grande dimension et une plus petite dimension, la plus grande dimension étant alignée perpendiculairement à la surface externe (20 ; 37) du véhicule.

11. Appareil selon la revendication 1, caractérisé en ce que le dispositif donnant une rigidité diélectrique localement réduite comporte plusieurs organes conducteurs de fixation (42) ayant chacun une saillie conductrice (44) formée sur l'organe conducteur et qui dépasse en direction perpendiculaire à la surface conductrice (10), si bien que la rigidité diélectrique du revêtement (17) est réduite dans la région de chaque organe de fixation (42).

**Patentansprüche**

1. Blitzschutzeinrichtung (15; 40) für eine elektrisch leitfähige äußere Oberfläche (20; 37) eines Fahrzeugs (4), umfassend:

eine Schutzbeschichtung (17) aus elektrisch isolierendem Material, die an der äußeren Oberfläche (20; 37) des Fahrzeugs anhaftet; und

Mittel zum Fördern einer Blitzverbindung mit der beschichteten äußeren Oberfläche (20; 37) an einer Mehrzahl von Stellen; dadurch **gekennzeichnet,** daß das die Verbindung fördernde Mittel Mittel innerhalb der Beschichtung (17) zum Vorsehen von lokal verminderter dielektrischer Festigkeit zwischen der äußeren Oberfläche (20; 37) des Fahrzeugs (4) und der äußeren Oberfläche der Beschichtung (17) an einer Mehrzahl von Stellen umfasst.

2. Einrichtung nach Anspruch 1, dadurch **gekennzeichnet,** daß das Mittel zum Vorsehen einer lokal reduzierten dielektrischen Festigkeit eine Mehrzahl von leitfähigen Teilchen (22) umfaßt, die in der Beschichtung (17) gelagert sind, wobei diese Teilchen (22) in einer Richtung, die parallel zu der äußeren Oberfläche (20; 37) des Fahrzeugs ist, um eine Entfernung beabstandet sind, die größer als die Dicke der Beschichtung (17) ist.

3. Einrichtung nach Anspruch 2, dadurch **gekennzeichnet,** daß die Teilchen (22) eine Maximal-Dimension haben, die größer als 1/10 der Dicke der Beschichtung (17) ist.

4. Einrichtung nach Anspruch 2, dadurch **gekennzeichnet,** daß die Teilchen (22) unregelmäßig geformt sind.

5. Einrichtung nach irgendeinem der Ansprüche 2 bis 4, dadurch **gekennzeichnet,** daß die Teilchen (22) unter hoher elektrischer Feldbeanspruchung in elektrischem Kontakt mit der äußeren Oberfläche (20; 37) des Fahrzeugs sind.

6. Einrichtung nach irgendeinem der Ansprüche 2 bis 5, dadurch **gekennzeichnet,** daß die dielektrische Festigkeit zwischen benachbarten leitfähigen Teilchen (22) aus der Mehrzahl von leitfähigen Teilchen (22) in einer Richtung, die parallel zu der äußeren Oberfläche (20; 37) des Fahrzeugs ist, größer als die dielektrische Festigkeit von der äußeren Oberfläche der Beschichtung (17) zu der äußeren Oberfläche (20; 37) des Fahrzeugs ist.

7. Einrichtung nach irgendeinem der Ansprüche 2 bis 6, dadurch **gekennzeichnet,** daß die Trennung zwischen benachbarten leitfähigen Teilchen (22) aus der Mehrzahl von leitfähigen Teilchen (22) in einer Richtung, die parallel zu der äußeren Oberfläche (20; 37) des Fahrzeugs ist, größer als die Dimension der Teilchen (22) in einer Richtung ist, die parallel zu der äußeren Oberfläche (20; 37) des Fahrzeugs ist.

8. Einrichtung nach irgendeinem der Ansprüche 2 bis 7, **gekennzeichnet** durch eine Lackschicht (27), die an der äußeren Oberfläche (20; 37) des Fahrzeugs haftet und die elektrisch isolierende Schutzbeschichtung (17) trägt.

9. Einrichtung nach Anspruch 8, **gekennzeichnet** durch eine Mehrzahl von leitfähigen Teilchen (22), die in der Lackschicht (27) gelagert sind, wobei diese Teilchen (22) um Entfernungen beabstandet sind, die größer als die maximale Dimension der Teilchen (22) ist.

10. Einrichtung nach Anspruch 9, dadurch **gekennzeichnet,** daß jedes aus der Mehrzahl von leitfähigen Teilchen (22) eine große und eine kleine Dimension hat, wobei die große Dimension senkrecht zu der äußeren Oberfläche (20; 37) des Fahrzeugs ausgerichtet ist.

11. Einrichtung nach Anspruch 1, dadurch **gekennzeichnet,** daß das Mittel zum Vorsehen einer lokal verminderten dielektrischen Festigkeit eine Mehrzahl von leitfähigen Befestigungselementen (42) umfaßt, von denen jedes einen darauf ausgebildeten leitfähigen Vorsprung (44) hat, welcher sich in einer Richtung erstreckt, die senkrecht zu der leitfähigen Oberfläche (20) ist, so daß dadurch die dielektrische Festigkeit der Beschichtung (17) in dem Bereich von jedem Befestigungselement (42) vermindert ist.

FIG. 1

FIG. 2

15

FIG. 3

FIG. 4

FIG. 5

<u>40</u>

FIG. 6